# EUROPEAN PATENT APPLICATION

(11) **EP 1 220 528 A2**
(43) Date of publication of application: **03.07.2002**
(21) Application number: 01310866.7
(22) Date of filing: 24.12.2001
(51) Int. Cl.: H04N 1/21

(54) **Processing images or audio representations**

(30) Priority: 29.12.2000 GB 0031828
(71) Applicant: Nokia Corporation, 02150 Espoo (FI)
(72) Inventor: Laaksonen, Mika H., 90500 Oulu (FI)
(74) Representative: Ruuskanen, Juha-Pekka

(57) **Abstract**

A data unit for storage of representation data such as an image of audio representation data. An image or an audio presentation can be represented by representation means based on said data. The data unit is adapted to contain information regarding adjustments that have been made to said image or audio representation after said data was input in the data unit. A representation device may modify the image data fetched from the data unit based on said information and modify the image or audio presentation accordingly.

## Description

The present invention relates to processing of images that are displayed by representation means to a viewer thereof based on image data stored in a data unit. The present invention relates also to processing of audio presentations replayed by representation means to a listener thereof based on audio data stored in a data unit. In particular, but not exclusively, the invention relates to representation of edited or otherwise adjusted versions of images or audio presentations.

An image can be represented by means of an appropriate representation device. For example, an image can be displayed by a display device comprising a display screen or other means for presenting an image based on image data. An audio presentation, such as speech or a musical or other artistic audio presentation, can be represented by an appropriate device comprising sound reproduction means, such as a loudspeaker.

The image data can be created, for example, by means of a digital camera. When a photograph is taken by the digital camera, the digital camera creates an image data file that may be stored in a memory means of the camera. The image data may also or alternatively be stored in a removable data carrier, such as in a tape, CD (compact disc) or a memory card. The same principles apply to recordings of audio representations. Digital cameras or digital audio recording devices are well known in the art, and will thus not be explained in more detail herein.

Typically the image or audio data is stored in a file, record or similar data unit. It is possible to compress the data stored in the data unit. The compressed data requires less storage capacity when stored in an appropriate data storage means. A reason for the compression is that the digital cameras or other portable devices are typically provided only with a limited storage capacity. Furthermore, if the data unit is to be transported between two or more devices, compressed data files require less transportation capacity from the communication media between the devices.

An example of compressed data units is a compressed JPEG file for storing image data. The term 'JPEG' stands for Joint Photographic Experts Group which is formed by experts nominated by standards bodies and major companies. A standard by the JPEG is IS 10918-1 (ITU-T T.81), which is the first of a multi-part set of standards for still image compression. JPEG is based on the features of this standard, in association with a JFIF file format by C-Cube Microsystems.

Digital cameras typically compress images with a so called lossy compress algorithm before storing these to a memory. The above referenced JPEG supports the lossy compression. By means of the lossy compression the size of the image files can be made small enough so that it is possible to store the image data in limited storage capacity of the camera. A disadvantage of the lossy compression technique is that it loses information during the compressing operations.

One important feature of the digital photography is that it is possible to adjust and edit the images afterwards. The changes can be made by anybody. That is, the creator (i.e. the photographer) or the viewer or any other person in a chain between the creator and the viewer may edit or otherwise alter the image. Common tasks that may be done to an image are, for example, adjustment of brightness and contrast, white balance or gamma curve of the image. These operations are not computationally expensive and relatively easy to perform. Another important editing task is cropping of the image. In the cropping unnecessary or otherwise unwanted areas of the image are cut out from the boundary areas of the image. In that way image size resolution, and thus size of the image file can be reduced.

An unwanted side effect of the editing processes is that the quality of the image may be reduced. For example, if an image is edited and stored successive times the quality of image may be reduced in each editing cycle comprising decompression - compression and storing. This is caused by the possibility of loosing information during the image compression stages, especially if a lossy compression algorithm is used.

Thus the visual quality of the image may be reduced every time the image is fetched from, decompressed, compressed and stored again in the image data file. Since the decompression-compression cycle typically happens every time the image data is processed, the visual quality of the image may get progressively worse each time an image is subjected to modifications. The image may start gradually look worse and/or it starts include artifacts.

Furthermore, e.g. the JPEG file format does not contain any indication regarding the resolution in which the image has been saved. The image processing softwares typically allow the user to select the resolution in which the image is to be saved. Thus, if the image is edited and subsequently saved with lower resolution the quality of the image gets worse. On the other hand, saving the image with higher resolution than what has been used previously may also be disadvantageous. The additional data comprises error that was caused by the previous compression cycle and the size of the image file is unnecessarily increased. In addition, different softwares may use different quality parameters (e.g. 0-1, 0%-100%, 0-255 and so on.

In the above images are edited and stored in a lossy compression format. Another possibility is to store images by so called lossless compression formats. JPEG2000 is an example of a compression standard supporting both lossy and lossless compression. However, the lossless formats require more memory capacity for the image data storing than the lossy formats. Therefore the lossless formats may not be suitable for substantially small portable devices, such as for example digital cameras or display devices or portable digital audio recorders or players.

Furthermore, data may be lost even in the "lossless" compression. For example, lets assume that an audio signal gets values between 0 and 1. If the signal is amplified some of the audio data may become "clipped" because a part of the signal may have been amplified out of its dynamic range. Thus a part of the audio information may become lost and the quality of the representation becomes worse. It shall be appreciated that amplification of an audio signal is analogous to the adjustment of brightness of an image.

The digital imaging is gaining more popularity. An especially rapidly growing area of digital image handling is believed to be transportation of digital image data over data networks. At least the transmitting device or the receiving device may be a portable user equipment or other station capable of communication over a wireless interface with the data network apparatus. As the size and/or weight is typically an important feature of portable devices, the above discussed limitations in size and memory capacity need to be taken into consideration when designing such devices.

The end users of the image capturing or displaying devices may also wish to edit the images. To enable this it is likely that even the user equipment will be provided with at least some level of adjustment facility. The inventor believes also that at least in the first wireless image data transmission devices the image compression methods are likely to be based on lossy compression techniques. This is believed to be so because of the pixel count in the image and demands on storing capacity grow faster than technologies that may be used to increase the storage capacity. However, the deteriorating quality of the images may become a problem also with devices that are based on the lossless techniques.

Embodiments of the present invention aim to address one or several of the above problems.

According to one aspect of the present invention, there is provided a data unit for storage of image or audio representation data so that an image or an audio presentation can be represented by representation means based on said data, the data unit comprising information regarding adjustments that have been made to said image or audio representation after said data was input in the data unit.

According to another aspect of the present invention there is provided a display device, comprising a display means, a storage means for storing image data associated with an image, said image data being included in an image data unit, and a processor means for processing image data adapted to process image data based on information also included in said image data unit, said information being indicative of changes to be made to the image data before the image is displayed on the display means.

According to another aspect of the present invention there is provided a method of displaying an image, comprising: storing image data associated with the image in a data storage means; storing information indicative of modifications made to the image in the data storage means so that said information can be fetched when the image is to be displayed by a display device; modifying the image based on said information; and displaying the modified version of the image.

The embodiments may enable edition and/or adjustment of images or audio representations which are stored in a compressed or otherwise processed format without any substantial reduction in the quality when the image or audio representation is represented. The embodiments may enable more efficient use of the storage capacity of the user equipment adapted to process the data. The embodiments may provide an easy way to undo changes and return to the original image or audio presentation without losses in quality or information content. An image can be adjusted in several different ways without affecting the original image information. For example, the embodiments may enable storage of two different white balance or brightness/contrast settings and selection one of these based on the conditions or situations in which the image is displayed.

For better understanding of the present invention, and ways to put the invention into effect, reference will now be made by way of example to the accompanying drawings in which:
Figure 1 shows an image presentation means in which embodiments of the present invention may be utilised;
Figures 2a to 2c illustrate an embodiment of the invention;
Figure 3 is a flowchart illustrating the operation of an embodiment of the present invention; and
Figures 4a and 4b illustrate a further embodiment of the present invention.

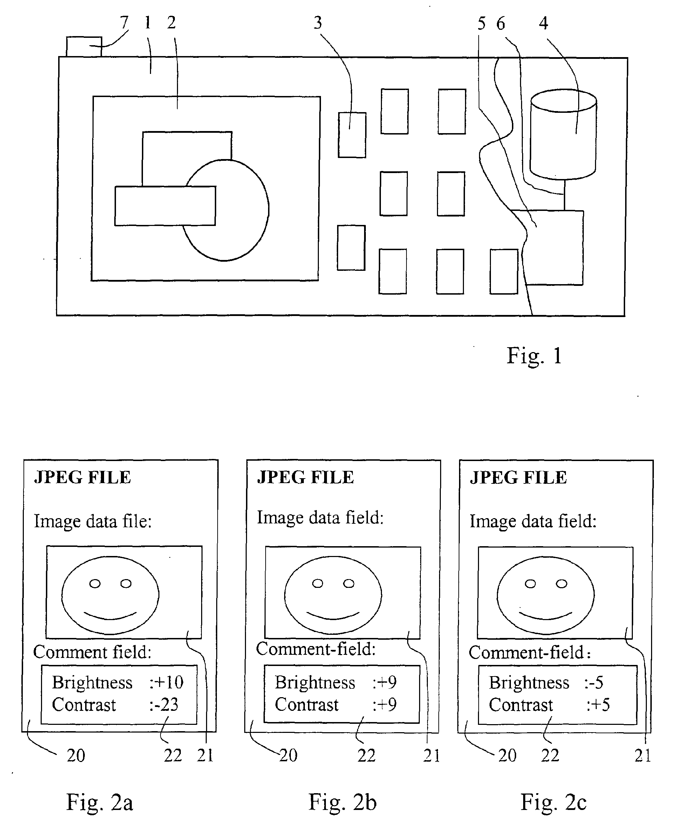

Reference is made to Figure 1 which shows a portable user equipment 1 comprising a display means 2. More particularly, the user equipment 1 comprises a mobile station capable of communication over a data communication network via a wireless interface between antenna means 7 and the network. Elements of the data communication network are not shown for clarity reasons.

The operation of the representation device 1 and/or the display screen 2 may be controlled by a control processor 5. The device 1 is also preferably provided with data storage means 4. An operational connection 6 is provided between the data storage means 4 and the control processor 5.

The display means 2 is adapted to present images based on image data. The image data may be stored in the storage 4. The image data may be processed by the processor 6 before displaying the image to the user. The processing may be accomplished based on a control software run on the processor.

The device 1 may comprise one or more control buttons 3. The control buttons may be used to control the operation of the device and also to edit the image before and during the display thereof.

The schematic exemplifying image displayed by the display screen 2 illustrates two boxes and a ball. The display means may comprise any appropriate display arrangement, such as a liquid crystal display (LCD). It shall be appreciated that the display means 2 of Figure 1 is only an example, and that the display means 1 does not form an essential part of the invention. The display means may alternatively comprise e.g. a printer device producing a reprint of the image based on image data processed by the user device 1. Since the presentation devices and possible display means as such are well known by the skilled person, these will not be described in more detail herein.

The following will discuss in more detail exemplifying embodiments of the invention. More particularly, the firstly described embodiment relates to prevention of quality losses when adjusting colours (brightness/contrast, white balance, gamma correction and so on) of the image.

In the first example described with reference to Figures 2a to 2C, a JPEG file format is used for storing and/or transporting image data. JPEG file format is a well known format in the art of storing images using lossy compression, and the principles thereof will thus not be explained in more detail. For the purposes of understanding the embodiment it is sufficient to note that a JPEG file is provided with a comment field.

The inventor has realised that it is possible to store free form information that associates with the adjustments in such a separate field of the data unit contained compressed data. In accordance with a preferred embodiment the information can be stored in a predefined manner in the comment field of the JPEG file.

When the image is edited the data stored in the comment field can be edited accordingly. That is, the data associated with the changes in the image can be stored to the JPEG file by storing this data in the comment field instead of amending the actual image data. By means of this it may be possible to avoid subsequent decompress-compress steps of the image data and thus quality losses in the image itself. This procedure may also quicken the saving operations of the image since it is not necessary to recompress (i.e. repack) the image after the processing thereof.

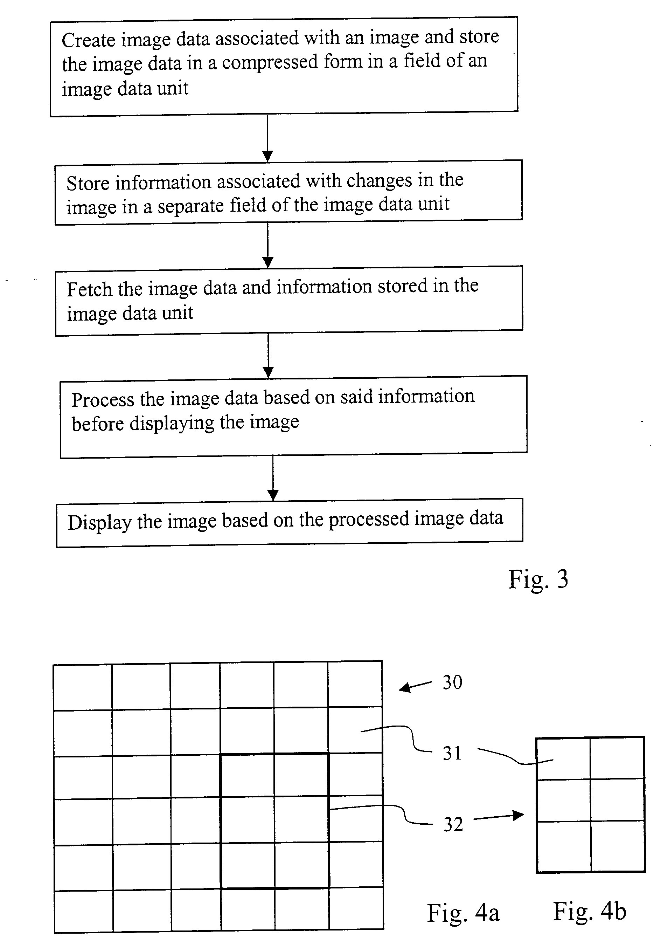

This operation is illustrated in more detail by Figures 2a to 2c and by the flowchart of Figure 3. As shown by the Figures, a JPEG file 20 contains two separate data fields 21,22. The first field 21 is for compressed image data of an image and the second field 22 is for comments that associate with the image.

Figure 2a illustrates situation when image data is stored in the image data field 21 for the first time. The comment field 22 comprises first settings for the brightness and contrast of the image. These may be the initial settings that were set when the image data was created as a basic setting to be used when displaying the image. It shall be appreciated that while Figures 2a to 2c show two data fields for clarity reasons, an image data file may comprise more than two data fields.

Figure 2b shows the situation after the image data has been fetched once and the viewer of the image has adjusted the brightness and contrast parameters to suit better for his/hers use. Figure 2c shows the situation after n edition cycle.

In the prior art arrangements the image data in the image data field 21 would have been changed according to the changes in the brightness and contrast parameters after each edition cycle, that is after the amendments shown by Figures 2b and 2c. Thus the image data saved in field 21 after these editing cycles would not have been any longer the sama data as what it initially was in Figure 2a.

In the preferred embodiment of the present invention the image data saved in the image data field 21 remains substantially the same after each editing cycle. Instead of amending the image data stored on field 21 when editing the image, the original image data is processed based on the information in the comment field 22 before displaying the image. The processing is accomplished based on the comment field 22 so that the image to be displayed to the viewer corresponds the latest changes while the changes are done to the original, unchanged image data stored in the image data field 21.

For example, the processor 5 of the display device 1 may be adapted to process the image data stored in on field 21 based on the information in the comment field 22. In order to be able to display the latest version of the image, image adjustment operations indicated by the comment field information are done to the decompressed image data before the image is displayed by the display screen 2.

A further embodiment relates to prevention of quality losses when adjusting image boundaries, i.e. during the so called image cropping. This embodiment is described with reference to Figures 4a and 4b. As above the data is stored in a JPEG file format. The original image 30 has been divided into smaller image data blocks 31. The image data blocks 31 may comprise, for example, 8 pixel * 8 pixel blocks. Lossy JPEG compression may be used for compressing each of the image data pixel blocks 31 one by one to the compressed format. In the compressed format the blocks 31 are preferably stored in the same order as they are in the original image 30.

It is sometimes necessary to cut of the border areas of the image 30, i.e. to crop the image. For example, it may be necessary to adjust the boundaries of the image, e.g. so that the image fits the available display screen area of the display device. The cropped area of the image is shown to comprise the six blocks 31 within the rectangular window 32.

By means of the invention it is possible to crop a desired image area without first decompressing all of the cropped pixel blocks 31 for preview purposes. Only selected pixel block can be fetched from the image data file based on information associated with the image data. The information regarding the blocks that need to be selected may be stored in the comment field of the JPEG file as described above.

In Figure 4a the selected blocks are the ones located within the cropping window 32. The blocks outside the window 32 are not processed, i.e. not are not fetched nor subjected to any decompression operations. The cropping may be done without affecting the original JPEG image data on the image data file. The cropped pixel blocks may copied to a new, different JPEG file. The image data associated to image 32 of Figure 4b may be stored after viewing for later use or it may deleted.

Thus it is possible to avoid a decompression-compression step of the image data during the cropping procedure and thus avoid quality losses caused by a decompression-compression cycle, as a re-compression step can be avoided. By providing cropping information in the comment field modifications of the image data itself may be avoided. The cropping information may be used to define different image area borders for the same basic image so that it may be used in different occasions. The embodiment may also save processing time and/or capacity since it is not necessary to decompress all data blocks before the selection of the blocks to be fetched for the display.

If a cropped image is fetched and saved based on the compressed data blocks and cropping information, a new image comprising the fetched blocks may be saved without first decompressing and compressing the image data. In the above example that would means that the selected 8*8 pixel blocks are saved as a new image data filed file comprising 8*8 pixels blocks. If the blocks are decompressed, it is not necessary to save them in similar 8*8 blocks, but the blocks may be subjected to changes.

The above has described usage of the comment field of a JPEG file. This does not does not prevent viewing an image based on image data stored in the JPEG file by means of programs and display applications which are not capable of understanding the information content in the comment field. The comment field is a part of the JPEG standard, and the JPEG compatible devices are typically adapted to ignore any information in the comment field they cannot interpret and/or utilise. There is no limitations for the content that may be stored in said comment field.

The above example refers to information associated with processing of features such as the colours, brightness, contrast, white balance and/or boundaries of an image. However, it is also possible to store information associated with other editing operations.

For example, an image may be subjected to a sharpen operation. The sharpen operation is used to emphasise edges that are present in an image. If too much sharpening has been provided the visual quality of the image may suffer. If too strong sharpening is removed data will in most cases be lost. A mention of any sharpening operations added in the comment field may be used for the adjustments later on without modifications to the actual image data. In addition, if the image data is saved before any sharpening operations and the information thereof is added in the comment field, the compression of the image data may be easier to perform by the JPEG since the image data contains less high frequencies.

Another further example comprises information associated with the quality parameter that has been used when the image was saved. By adding an indication regarding the quality and the quality parameter in which the image was saved in the comment field it is possible to use the same quality in all subsequent saving operations.

It shall be appreciated that although the embodiments of the present invention have been described in the context of a JPEG format, the invention is also applicable to any other compression and/or processing techniques. For example, it is possible to store image data in a JPEG 2000 file or any other data format which supports a field enabling inclusion of additional data associated with the image.

It shall be appreciated that whilst the Figure 1 embodiment of the present invention was described in relation to a mobile station, embodiments of the present invention are applicable to any other suitable type of user equipment capable of presenting an image or audio presentation to the user thereof. These devices include, without limiting to these, digital cameras and recorders, various display devices provided with image editing facility and so on.

The term image refers also to an image of a plurality of images that are displayed in succession. For example, moving pictures or multimedia presentations consist of a series of successive images. Each data unit that associates with an image (or several images) may be provided with information regarding adjustments that have been made to the presentation. In such case the adjustments are made to each image (or picture frame) after the associated image data has been fetched from the memory means. Alternatively, at least one of the data units is provided with said adjustment information. The display is then adjusted based on said at least one data unit containing adjustment information. The same technique can be analogously applied to audio presentations.

The way how the information associated with the changes in the image or audio presentation is stored in the separate data field may be standardised, at least to some level, so that different software applications that write/read information in the separate data field may recognise the information associated with the amendments.

It is also noted herein that while the above describes exemplifying embodiments of the invention, there are several variations and modifications which may be made to the disclosed solution without departing from the scope of the present invention as defined in the appended claims.

## Claims

1. A data unit for storage of image or audio data so that an image or an audio presentation can be represented by representation means based on said data, the data unit comprising information regarding adjustments that have been made to said image or audio representation after said data was input in the data unit.

2. A data unit as claimed in claim 1, comprising at least two fields such that said information is stored in a field that is separate from a field in which said data is stored.

3. A data unit as claimed in claim 2, wherein said separate field comprises a comment field.

4. A data unit as claimed in any preceding claim being adapted to provide the representation means with information regarding changes that are to be made to the image or the audio presentation before representation thereof.

5. A data unit as claimed in any preceding claim, wherein the data unit comprises compressed data.

6. A data unit as claimed in any preceding claim, wherein the data unit comprises an image data field.

7. A data unit as claimed in any preceding claim, wherein the image data is stored in a lossy format.

8. A data unit as claimed in claim 7, wherein the image data field comprises a JPEG file or similar.

9. A data unit as claimed in any of claims 6 to 8, wherein the adjustments relate to one or more of the following adjustments: brightness of the image; contrast of the image; white balance of the image; gamma correction of the image; boundaries of the image; sharpening of the image; quality of the image.

10. A display device, comprising:
a display means;
a storage means for storing image data associated with an image, said image data being included in an image data unit; and
a processor means for processing image data adapted to process image data based on information also included in said image data unit, said information being indicative of changes to be made to the image data before the image is displayed on the display means.

11. A display device as claimed in claim 10, wherein the processor means is adapted to change at least one of the following features of the image based on said information included in the data unit: brightness of the image; contrast of the image; white balance of the image; gamma correction of the image; boundaries of the image; sharpening of the image; quality of the image.

12. A display device as claimed in claim 10 or 11, wherein the arrangement is such that the changes in the image to be displayed do not affect the image data stored in the data unit.

13. A display device as claimed in any of claims 10 to 12, wherein the processor means is adapted to modify the image based on information included in a comment field of the data unit.

14. A display device as claimed in any of claims 10 to 13, wherein the processor means is adapted to change said information indicative of the changes in the image.

15. A display device as claimed in any of claims 10 to 14, comprising a portable device.

16. A display device as claimed in any of claims 10 to 15, comprising a mobile station.

17. A display device as claimed in any of claims 10 to 16, comprising a digital camera.

18. A method of displaying an image, comprising:
storing image data associated with the image in a data storage means;
storing information indicative of modifications made to the image in the data storage means so that said information can be fetched when the image is to be displayed by a display device;
modifying the image based on said information; and
displaying the modified version of the image.

19. A method as claimed in claim 18, wherein said image data is stored in a compressed form in an image data field of an image data storage unit and said information indicative of modifications is stored in another field of the image data storage unit.

20. A method as claimed in claim 19, wherein said other field comprises a comment field.

21. A method as claimed in claim 19 or 20, wherein the image data is stored in a lossy format.

22. A method as claimed in any of claims 18 to 21, wherein the modification comprises modification of at least one of the following features of the image: brightness of the image; contrast of the image; white balance of the image; gamma correction of the image; boundaries of the image; sharpening of the image; quality of the image.

23. A method as claimed in any of claims 18 to 22, wherein the most recent information indicative of the modifications of the image is stored while the image data remains substantially unchanged after the image has been modified.

24. A method as claimed in any of claims 18 to 23, comprising the steps of:
dividing the image area into a plurality image blocks before the step of storing the image data;
compressing the image data in each of the image blocks separately;
storing the compressed image blocks in the data storage means;
selecting at least one of the image data blocks to be fetched from the data storage means based on said information indicative of the modifications;
fetching said selected at least one image data block from the data storage means;
decompressing said at least one fetched image data block; and
displaying the content of the decompressed at least one image data block.

25. A method as claimed in claim 24, wherein the selection of the image data blocks is accomplished to adjust the size of the image area to be displayed.

26. A method as claimed in any of claims 18 to 25, wherein the image is one of a plurality of images that are displayed in succession.

27. A method as claimed in claim 26, wherein each image of said plurality of images is provided with information indicative of modifications made to said image.

28. A method as claimed in claim 26, wherein at least one image of said plurality of images is provided with information indicative of modifications made to said image, and wherein at least one other image of the said plurality of images is modified based on said information.

29. A method as claimed in any of claims 18 to 28, wherein the image is displayed on a screen of a portable display device.

30. A method as claimed in claim 29, wherein the image data is transmitted to the display device over a wireless interface.
